# EUROPEAN PATENT SPECIFICATION

(11) **EP 1 260 855 B1**
(45) Date of publication and mention of the grant of the patent: **21.11.2007**
(21) Application number: 02010747.0
(22) Date of filing: 14.05.2002
(51) Int. Cl.: G03B 21/62

(54) **Curved screen for an image display and its use**
Gebogener Schirm für eine Bildanzeigevorrichtung und dessen Verwendung
Ecran courbe pour visualisation d'images et son utilisation

(30) Priority: 15.05.2001 IT PD20010111
(43) Date of publication of application: 27.11.2002
(73) Proprietor: BOTTIN, Pier Paolo, 35030 Selvazzano Dentro (PD) (IT); PINTON, Cristina, 35030 Selvazzano Dentro (PD) (IT)
(72) Inventor: Bottin, Pier Paolo, 35030 Selvazzano Dentro (PD) (IT)
(74) Representative: Cantaluppi, Stefano

(56) References cited:
- EP-A- 1 061 399
- GB-A- 675 856
- GB-A- 2 354 838
- US-A- 3 311 017
- US-A- 4 640 266
- US-A- 4 656 506
- PATENT ABSTRACTS OF JAPAN vol. 1999, no. 02, 26 February 1999 (1999-02-26) -& JP 10 312028 A (HITACHI LTD;HITACHI VIDEO IND INF SYST INC), 24 November 1998 (1998-11-24)
- PATENT ABSTRACTS OF JAPAN vol. 009, no. 136 (E-320), 12 June 1985 (1985-06-12) -& JP 60 020692 A (HITACHI SEISAKUSHO KK), 1 February 1985 (1985-02-01)
- PATENT ABSTRACTS OF JAPAN & JP 02 250600 A 8 October 1990 (1990-10-08)

## Description

The subject of the present invention is a method of generating images with a high level of subjective involvement, comprising the step of projecting the images onto a curved screen.

The invention also relates to a device for generating images by the implementation of the above-mentioned method.

For many purposes, from psychotherapeutic purposes to purely games purposes, there is a need to increase the personal involvement of one or more people subjected to the sight of artificial images. The term "artificial images" is intended to include, in this context, images which are projected or otherwise made available on a screen in order to reproduce desired environments and/or situations.

A typical use is, for example, the use of artificial images for the purposes of games (so-called video games) in which it is sought to achieve maximum involvement of the player in the environment and in the situations recreated by the video game by the projection of an image onto a screen.

As a result of studies into the isolated environment containing a human subject provided with a multi-sensory media system, so-called "virtual-reality" systems have been found substantially inadequate since they do not lead to the perception of the subject being in the environment recreated. In practice, the subject does not see himself or parts of his own body as being involved in the artificial environment, which prohibits the physical perception thereof in altered states of consciousness.

This leads to a reduction in the credibility, to the person subjected to the artificial image, of his own presence and involvement.

In order to recreate environments with strong viewer involvement, technological solutions have been devised which provide for the use of curved screens. Typical examples of these technical solutions are described in Japanese patent No. 10239769, in United States patent No. 3998522, in United States patent No. 4340274 and in Japanese patent No. 10312028. Additionally, a method and device for generating images with a high level of subjective involvement having the features outlined in the preamble of the main claims are disclosed in US 4656506 and US 3311017.

However, none of these technical solutions has been found satisfactory for giving a sensation of full involvement of the viewer or viewers in the artificial environment recreated.

The technical problem addressed in the present invention is therefore that of generating images with a high level of subjective involvement of the viewer or viewers who are introduced into the artificial environment thus recreated.

Within the scope of this problem, the principal object of the invention is to provide a method and a device which permit this high level of subjective involvement with relatively simple and inexpensive apparatus.

A further object of the invention is to provide a method and a device which can give the viewer a realistic perception of his own physical involvement in the artificial environment recreated.

This problem is solved and these objects are achieved by the invention by means of a method of generating images with a high level of subjective involvement and a device for implementing the method, which are implemented and formed in accordance with the appended claims.

The characteristics and the advantages of the invention will become clearer from the detailed description of a preferred embodiment thereof, described by way of non-limiting example, with reference to the appended drawings, in which:
- Figure 1 is a schematic plan view of a device for generating images in accordance with the method of the invention, and
- Figures 2 and 3 are perspective views of the device of Figure 1, in a non-operative, open condition for access by a viewer, and in an operative condition, respectively.

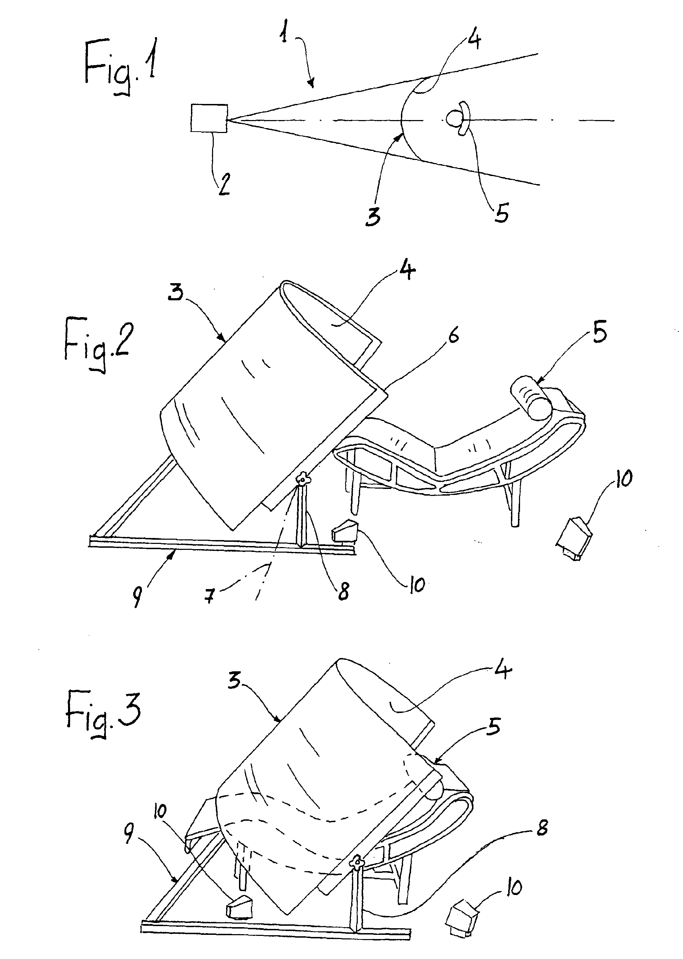

In Figure 1, a device for generating images with a high level of subjective involvement is generally indicated 1 and comprises a video-projector 2 which can project an image by illumination from the rear, onto a curved screen 3 having its concave surface 4 facing a viewing position 5, relative to which the screen 3 is arranged with relative spacing.

With reference to Figures 2 and 3, the screen 3 is formed by a sheet of semitransparent opaline resin, framed by a frame 6 by means of which the screen 3 is connected to opposed uprights 8 of a base 9 so as to be orientable about a horizontal axis 7.

The viewing position 5 is represented in this embodiment by a "chaise-longue"-type seat, relative to which the screen 3 is movable, with its frame and base, from the non-operative, open position of Figure 2, in which access by the viewer to the viewing position 5 is favoured, to the operative position of Figure 3, in which the relationship between the screen, its curvature, and the viewing position is such that the screen is at least partially wrapped around a person lying in the viewing position, through an angle substantially greater than or equal to the angle of the person's field of view.

This angle, which is referred to below as the angular extent of the screen, is between 100° and 180°.

The screen 3 is substantially semicylindrical with a substantially semi-circular cross-section.

The relationship between the screen 3 and the viewing position 5 is also such that all of the points of any given parallel of the screen are substantially equidistant from the viewing position.

By virtue of this technical solution, the method of the present invention for generating images with a high level of subjective involvement can be implemented by projecting the images onto the screen 3, after the subject has been arranged in the vicinity of the centre of curvature of the screen 3, with the screen arranged so as to be at least partially wrapped around the subject, substantially over his whole field of view.

The images are projected from the rear, with a capability to correct for the marginal magnification of the images resulting from the curvature of the screen, either post-production, or by means of subsequent processing of the images to apply the required optical corrections. A facility for correcting the image by means of an optical-lens or refraction system known *per se* may also be provided. The images may also be generated on the screen by different technology (plasma screen, LCD, etc.).

Projection onto the rear of the curved screen in accordance with the method of the invention has the following advantages over conventional displays. In the first place, it enables the person to be substantially immersed in the artificial image recreated on the screen, resulting in his immersion in the environment recreated and consequently in high levels of emotional involvement.

The direct perception of oneself also renders the view more credible than conventional virtual-reality systems.

The device may also be completed by sound sources, optionally with holophonic modes of operation, by means of sound reproducers or emitters, schematically indicated 10. The screen is thus advantageously used as a sound reflector for the emitters 10 so that the sound reflected from the screen interacts with the images in the viewer's audio-visual perception. This can easily be achieved by orienting the emitters 10 so that the sound produced is directed predominantly towards the concave surface of the screen and is reflected thereby and emitted towards the viewer in many directions.

The device and the method of the invention have the unquestionable advantage of a low cost, simplified cleaning, and no maintenance, since there are no moving parts. They are suitable particularly for the following fields of use: entertainment, video games, simulation, terminal systems, video conferencing, remote control, advertizing/ demonstration devices, television and multimedia uses in general, such as displays, possibly cinematographic or DVD shows, and the like, as well as in the psychotherapeutic field.

## Claims

1. A method of generating images with a high level of subjective involvement, comprising the steps of
- projecting the images onto the rear of a concave surface of a curved screen (3);
wherein the screen is semicylindrical;
and wherein the screen is framed by a frame (6) by means of which the screen is connected to opposed uprights (8) of a base (9) so as to be orientable about a horizontal axis;
- providing a chaise longue-type seat;
- moving the screen with its frame and base relative to the seat from a non-operative position to an operative position;
wherein the screen is arranged spaced from a viewing position (5) defined by the seat in the operative position such that the viewing position is arranged in the vicinity of the centre of curvature of the screen;
wherein the relationship between the screen, its curvature, and the viewing position is such that the screen is partially wrapped around and positioned above a person in the viewing position, through an angle which is between 100° and 180°;
and wherein the screen is orientable such that the centre axis of curvature of the projection screen substantially corresponds with the longitudinal axis of a person lying in the viewing position.

2. A device for generating images with a high level of subjective involvement, comprising
- a curved screen (3) having a concave surface on which the images can be projected from the rear; and
- a chaise longue-type seat,
**characterized in that**
- the screen is semicylindrical;
- the screen is framed by a frame (6) by means of which the screen is connected to opposed uprights (8) of a base (9) so as to be orientable about a horizontal axis;
- the screen with its frame and base is movable relative to the seat from a non-operative position to an operative position;
- the screen is arranged spaced from a viewing position (5) defined by the seat in the operative position such that the viewing position is arranged in the vicinity of the centre of curvature of the screen; wherein
- the relationship between the screen, its curvature, and the viewing position is such that the screen is partially wrapped around and positioned above a person in the viewing position, through an angle which is between 100° and 180°; and
- in which the screen is orientable such that the centre axis of curvature of the projection screen substantially corresponds with the longitudinal axis of a person lying in the viewing position.

3. A device according to Claim 2 in which sound reproducers and/or emitters (10) are arranged relative to the screen (3) in a manner such as to emit sound in a holophonic manner.

## Patentansprüche

1. Verfahren zum Erzeugen von Bildern mit einem hohen Grad an subjektiver Beteiligung, welches die folgenden Schritte aufweist:
- Projizieren des Bildes auf die Rückseite einer konkaven Fläche eines gebogenen Bildschirms (3);
wobei der Bildschirm halbzylinderförmig ist;
und wobei der Bildschirm von einem Rahmen (6) eingerahmt wird, mithilfe dessen der Bildschirm mit gegenüberliegenden Ständern (8) eines Sockels (9) verbunden ist, um so um eine waagerechte Achse ausrichtbar zu sein;
- Vorsehen eines Sitzes in der Art einer Liege;
- Bewegen des Bildschirms mit seinem Rahmen und Sockel bezogen auf den Sitz von einer offenen, nicht im Betrieb befindlichen Position zu einer Betriebsposition;
wobei der Bildschirm mit einem Abstand zu der Betrachtungsposition (5) angeordnet ist, die durch den Sitz in Betriebsposition definiert wird, so dass die Betrachtungsposition in der Nähe der Mitte der Biegung des Bildschirms angeordnet ist;
wobei die Beziehung zwischen dem Bildschirm, seiner Krümmung und der Betrachtungsposition derart ist, dass der Bildschirm eine Person in Betrachtungsposition teilweise umhüllt und über dieser angeordnet ist, mit einem Winkel, der zwischen 100° und 180° beträgt;
und wobei der Bildschirm so ausrichtbar ist, dass die Mittelachse der Biegung des Projektionsbildschirms im Wesentlichen der Längsachse der Person entspricht, die in der Betrachtungsposition liegt.

2. Vorrichtung zum Erzeugen von Bildern mit einem hohen Grad an subjektiver Beteiligung, welche aufweist:
- einen gebogenen Bildschirm (3) mit einer konkaven Fläche, auf welche die Bilder von hinten projiziert werden können; und
- einen Sitz in der Art einer Liege,
**dadurch gekennzeichnet, dass**
- der Bildschirm halbzylinderförmig ist;
- der Bildschirm von einem Rahmen (6) eingerahmt wird, mithilfe dessen der Bildschirm mit gegenüberliegenden Ständern (8) eines Sockels (9) verbunden ist, um so um eine waagerechte Achse ausrichtbar zu sein;
- der Bildschirm mit seinem Rahmen und Sockel bezogen auf den Sitz von einer offenen, nicht im Betrieb befindlichen Position zu einer Betriebsposition beweglich ist;
- der Bildschirm mit einem Abstand zu der Betrachtungsposition (5) angeordnet ist, die durch den Sitz in Betriebsposition definiert wird, so dass die Betrachtungsposition in der Nähe der Mitte der Biegung des Bildschirms angeordnet ist; wobei
- die Beziehung zwischen dem Bildschirm, seiner Krümmung und der Betrachtungsposition derart ist, dass der Bildschirm eine Person in Betrachtungsposition teilweise umhüllt und über dieser angeordnet ist, mit einem Winkel, der zwischen 100° und 180° beträgt; und
- wobei der Bildschirm so ausrichtbar ist, dass die Mittelachse der Biegung des Projektionsbildschirms im Wesentlichen der Längsachse der Person entspricht, die in der Betrachtungsposition liegt.

3. Vorrichtung gemäß Anspruch 2, bei welcher Klangwiedergabegeräte und/oder Sender (10) bezogen auf den Bildschirm (3) in einer Weise angeordnet sind, dass Klang auf holophone Weise gesendet wird.

## Revendications

1. Procédé de génération d'images à haut niveau d'implication subjective, comprenant les étapes :
■ projection des images sur l'arrière d'une surface concave d'un écran courbe (3) ;
dans lequel l'écran est semi-cylindrique
et dans lequel l'écran est encadré par un cadre (6) au moyen duquel l'écran est raccordé aux montants opposés (8) d'une base (9) de manière à pouvoir être orienté autour d'un axe horizontal ;
■ fourniture d' un siège de type chaise longue ;
■ déplacement de l'écran avec son cadre et sa base par rapport au siège d'une position non opérationnelle à une opération opérationnelle ;
dans lequel l'écran est agencé en étant espacé d'une position de visualisation (5) définie par le siège dans la position opérationnelle de telle sorte que la position de visualisation est agencée au voisinage du centre de courbure de l'écran ;
dans lequel la relation entre l'écran, sa courbure, et la position de visualisation est telle que l'écran est en partie enveloppé autour et positionné au-dessus d'une personne dans la position de visualisation, à travers un angle qui est compris entre 100° et 180° ;
et dans lequel l'écran peut être orienté de telle sorte que l'axe central de courbure de l'écran de projection correspond sensiblement à l'axe longitudinal d'une personne située dans la position de visualisation.

2. Dispositif de génération d'image à haut niveau d'implication subjective, comprenant
■ un écran courbé (3) présentant une surface concave sur laquelle les images peuvent être projetées depuis l'arrière; et
■ un siège de type chaise longue ;
**caractérisé en ce que**
■ l'écran est semi-cylindrique ;
■ l'écran est encadré par un cadre (6) au moyen duquel l'écran est raccordé aux montants opposés (8) d'une base (9) de manière à pouvoir être orienté autour d'un axe horizontal ;
■ l'écran avec son cadre et sa base est mobile par rapport au siège d'une position non opérationnelle à une position opérationnelle ;
■ l'écran est agencé en étant espacé d'une position de visualisation (5) définie par le siège dans la position opérationnelle de telle sorte que la position de visualisation est agencée au voisinage du centre de courbure de l'écran ; dans lequel
■ la relation entre l'écran, sa courbure, et la position de visualisation est telle que l'écran est en partie enveloppé autour et positionné au-dessus d'une personne dans la position de visualisation, à travers un angle qui est compris entre 100° et 180° ; et
■ dans lequel l'écran peut être orienté de telle sorte que l'axe central de courbure de l'écran de projection correspond sensiblement à l'axe longitudinal d'une personne située dans la position de visualisation.

3. Dispositif selon la revendication 2 dans lequel des lecteurs et/ou émetteurs de son (10) sont agencés par rapport à l'écran (3) de manière à émettre un son de façon holophonique.
